# EUROPEAN PATENT SPECIFICATION

(11) **EP 2 690 574 B1**
(45) Date of publication and mention of the grant of the patent: **18.04.2018**
(21) Application number: 12856539.7
(22) Date of filing: 07.12.2012
(51) Int. Cl.: G06F 21/10, G06F 21/33

(54) **METHOD AND SYSTEM FOR DIGITAL CONTENT ONLINE READING AUTHENTICATION**
VERFAHREN UND SYSTEM ZUR AUTHENTIFIZIERUNG DER ONLINE-LESUNG DIGITALER INHALTE
PROCÉDÉ ET SYSTÈME D'AUTHENTIFICATION DE LECTURE EN LIGNE DE CONTENU NUMÉRIQUE

(30) Priority: 09.12.2011 CN 201110409347
(43) Date of publication of application: 29.01.2014
(73) Proprietor: Peking University Founder Group Co., Ltd, Haidian District Beijing 100871 (CN); Beijing Founder Apabi Technology Ltd, Beijing 100080 (CN)
(72) Inventor: LI, Xiaolei, Beijing 100871 (CN); WAN, Wei, Beijing 100871 (CN); QU, Chao, Beijing 100871 (CN); LEI, Chao, Beijing 100871 (CN)
(74) Representative: Gevers & Orès
(86) International application number: PCT/CN2012/086147
(87) International publication number: WO 2013/083072

(56) References cited:
- WO-A2-2005/025116
- CN-A- 1 564 255
- CN-A- 1 971 576
- CN-A- 101 923 608
- CN-A- 101 989 988
- US-A- 5 982 891
- US-A1- 2006 107 046

## Description

### Field

The present invention relates to the field of computer information and particularly to a method of and system for authenticating an online read digital content.

### Background

Along with the rapid development of digital contents, more and more people have become interested in and read the digital contents, and in the meantime the reading pattern has gradually evolved into online reading, but competition for online reading is also increasingly intensive. In order to enable copyrights of the digital contents to be protected, privilege control is particularly important to the digital contents.

Various existing digital content products generally provide an online read function capable of performing privilege control on digital contents for the purpose of copyright protection for which there are two implementations in the prior art as follows:
1. In an autonomous control implementation, a function of management on digital contents is typically involved to maintain privileges of the digital contents and to provide a corresponding read range by referring to the privilege of a digital content when a user requests an online read.
2. In an interface control implementation, this implementation is separated from digital contents and irresponsible of privilege management but provides only an online read function, and when a user requests an online read, it requests a privilege authority for a privilege of the user and provides a read of a corresponding range after privilege information is obtained.

US5982891 describes a typical DRM system.

The applicants have identified during making of the invention at least the following technical problems in the prior art:

In the autonomous control implementation, all the digital contents have to be managed, and also the read function is mixed with the function of a service system instead of being separated, thus failing to provide a service to the outside as a versatile read tool.

In the interface control implementation, frequent communication with the privilege authority is required, thus resulting in a performance drawback, and also a corresponding interface has to be developed for a third party to access an online read, thus resulting in an increased cost.

### Summary

The invention is set out in the appended set of claims.

The invention provides a method of and system for authenticating an online read digital content so as to address the problems in the prior art of the functions being mixed instead of being separated in the autonomous control implementation and of frequent information interaction in the interface control implementation.

A method of authenticating an online read digital content includes:
receiving an online read first request from a terminal, and obtaining first user information in the first request;
obtaining first privilege information corresponding to the first user information according to stored correspondence relationships between privilege information and user information, and generating a first privilege model according to the first privilege information, the first privilege model including M function privileges possessed by a user, wherein M is larger than or equal to 1;
obtaining first certificate information corresponding to the first privilege model according to stored correspondence relationships between certificate information and privilege models;
generating a second request including the first privilege model and the first certificate information; and
authenticating the first certificate information and the M function privileges in the first privilege model, included in the second request.

Preferably the first privilege model includes one or more of a read range privilege, an online concurrence privilege, a service time privilege, a copy privilege and a print privilege, and there is a corresponding period of validity for each of the function privileges.

Preferably the first certificate information includes a unique certificate and a period of validity corresponding to the certificate.

Preferably the authenticating the first certificate information and the M function privileges in the first privilege model, included in the second request includes:
obtaining the first privilege model and the first certificate information in the second request based upon the second request;
authenticating the first certificate information and authenticating the M function privileges in the first privilege model according to a result of authenticating the first certificate information; and
providing the terminal with online read contents corresponding to a plurality of function privileges passing the authentication according to a result of authenticating the M function privileges.

Preferably the authenticating the first certificate information includes:
obtaining a period of validity in the first certificate information; and
comparing the period of validity of the first certificate information with the current time, and if the period of validity of the certificate is later than the current time, then having the certificate pass the authentication and parsing the first privilege model; otherwise, rejecting the second request.

Preferably the parsing the first privilege model includes:
obtaining the M privilege functions in the first privilege model and a period of validity corresponding to each privilege function; and
comparing the period of validity of each of the M privilege functions with the current time, and if L function privileges among the M function privileges have periods of validity later than the current time, then providing the terminal with online read contents corresponding to the L function privileges, wherein L is an integer larger than or equal to 0 and smaller than or equal to M.

A system for authenticating an online read digital content includes:
a service processing system configured to receive an online read first request from a terminal, to obtain first user information in the first request, to obtain first privilege information corresponding to the first user information according to stored correspondence relationships between privilege information and user information, to generate a first privilege model according to the first privilege information, the first privilege model including M function privileges possessed by a user, wherein M is larger than or equal to 1, to obtain first certificate information corresponding to the first privilege model according to stored correspondence relationships between certificate information and privilege models, and to generate a second request including the first privilege model and the first certificate information; and
an online read system configured to receive the second request, and to authenticate the first certificate information and the M function privileges in the first privilege model, included in the second request.

Preferably the online read system includes:
a receiving model configured to receive the second request;
an obtaining module configured to obtain the first privilege model and the first certificate information in the second request;
a certificate authenticating module configured to authenticate the first certificate information;
a privilege model authenticating module configured to authenticate the M function privileges in the privilege model according to a result of authenticating the first privilege information; and
a content providing module configured to provide the terminal with online read contents corresponding to a plurality of function privileges passing the authentication according to a result of authenticating the M function privileges.

Preferably the certificate authenticating module includes:
a certificate period of validity obtaining unit configured to obtain a period of validity in the first certificate information.
a certificate period of validity authenticating unit configured to compare the period of validity of the first certificate information with the current time, and if the current time is within the period of validity of the certificate, to have the certificate pass the authentication; otherwise, to reject the second request.

Preferably the privilege model module authenticating the M function privileges in the privilege model includes:
obtaining the M function privileges in the first privilege model and a period of validity corresponding to each function privilege; and
comparing the periods of validity of L function privileges among the M function privileges with the current time.

Particular technical effects of one or more implementations of the invention are as follows:
An online read first request from a terminal is received, first user information in the first request is obtained, first privilege information corresponding to the first user information is obtained, a first privilege model is generated according to the first privilege information, first certificate information corresponding to the first privilege model is obtained according to stored correspondence relationships between certificate information and privilege models, a second request including the first privilege model and the first certificate information is generated, and the first certificate information and M function privileges in the first privilege model, included in the second request, are authenticated, thereby addressing the performance problem of systems arising from frequent signal interaction between the systems and enabling convenient digital content management while ensuring the security of digital contents to inhibit illegal pirating and to well protect copyrights of the digital contents..

### Brief Description of the Drawings

Fig.1 is a flow chart of a method of authenticating an online read digital content according to the invention;
Fig.2 is a schematic diagram of a defined first privilege model according to the invention;
Fig.3 is a flow chart of authenticating a first privilege model and first certificate information in a second request in an online read system according to the invention;
Fig.4 is a system for authenticating an online read digital content according to the invention; and
Fig.5 is a schematic structural diagram of an online read system according to the invention.

### Detailed Description of the Embodiments

The invention provides a method of and system for authenticating an online read digital content so that when a user needs an online read, the user transmits a request to a service processing system, and then the service processing system obtains user information and generates and transmits a corresponding privilege model and certificate to an online read system, and the online read system provides the user with all of his own function privileges according to the privilege model and the certificate, thus addressing the performance problem of the systems arising from frequent signal interaction between the systems and enabling convenient digital content management while ensuring the security of digital contents.

A technical solution of the invention will be detailed below with reference to the drawings and embodiments thereof.

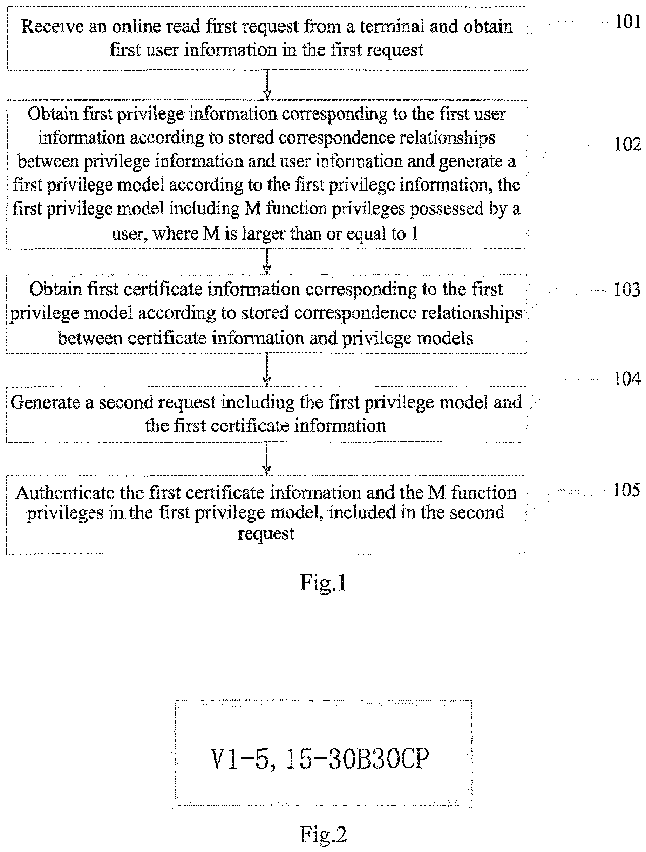

As illustrated in Fig.1 depicting a flow chart of a method of authenticating an online read digital content, a specif flow is as follows:

The step 101 is to receive an online read first request from a terminal and to obtain first user information in the first request.

The step 102 is to obtain first privilege information corresponding to the first user information according to stored correspondence relationships between privilege information and user information and to generate a first privilege model according to the first privilege information, the first privilege model including M function privileges possessed by a user, where M is larger than or equal to 1.

The correspondence relationships between privilege information and user information are pre-stored in a service processing system, and after the service processing system obtains the first user information, the service processing system will refer to the pre-stored correspondence relationships to thereby obtain the first privilege information corresponding to the first user information, where a function privilege(s) possessed by the user included in the first privilege information may include a definition of one or more function privileges.

After the first privilege information is obtained, the service processing system generates the first privilege model according to the definition of one or more function privileges in the first privilege information, so the first privilege model includes M function privileges possessed by the user, where M is larger than or equal to 1.

Particularly the M function privileges may include one or more of a read range privilege, an online concurrence privilege, a service time privilege, a copy privilege and a print privilege, and a function privilege(s) can be added or deleted in the service processing system as needed for the user.

Furthermore in order to prevent any of the M function privileges from being used infinitely by the user, a corresponding period of validity is set for each of the M function privileges.

The step 103 is to obtain first certificate information corresponding to the first privilege model according to stored correspondence relationships between certificate information and privilege models.

Since the correspondence relationships between certificate information and privilege models are stored in the service processing system, the service processing system, after the first privilege model is generated, will obtain the first privilege model and generate unique first certificate information correspondingly according to the first privilege model.

In order to enable a certificate of the user to be used effectively for a specific period of time, a period of validity corresponding to the certificate is further obtained after the certificate in the first certificate information is obtained, thus preventing the same certificate information from being used infinitively and also well protecting copyrights of digital contents.

The step 104 is to generate a second request including the first privilege model and the first certificate information and to transmit the second request to an online read system.

After the step 102 and the step 103, the service processing system obtains the first privilege information corresponding to the first user information and the first certificate information corresponding to the first privilege information, and then the service processing system will add the first privilege model and the first certificate information into Uniform Resource Locator (URL) parameters and generate the second request including the first privilege model and the first certificate information.

The first privilege model is passed in the URL parameters under such a rule that the first privilege model is followed by a privilege range, and this definition can be extended as needed in practice. As illustrated in Fig.2, V represents a read privilege, and 1-5 and 15-30 subsequent thereto indicate that the user can turn to the pages 1 to 5 and the pages 15 to 30 for their contents; and other privileges can be defined for extension as needed in practice.

The step 105 is to authenticate the first certificate information and the M function privileges in the first privilege model, included in the second request.

Upon reception of the second request, the online read system will authenticate firstly the first certificate information in the second request and then authenticate by an authentication structure of the first certificate information the M function privileges in the first privilege model

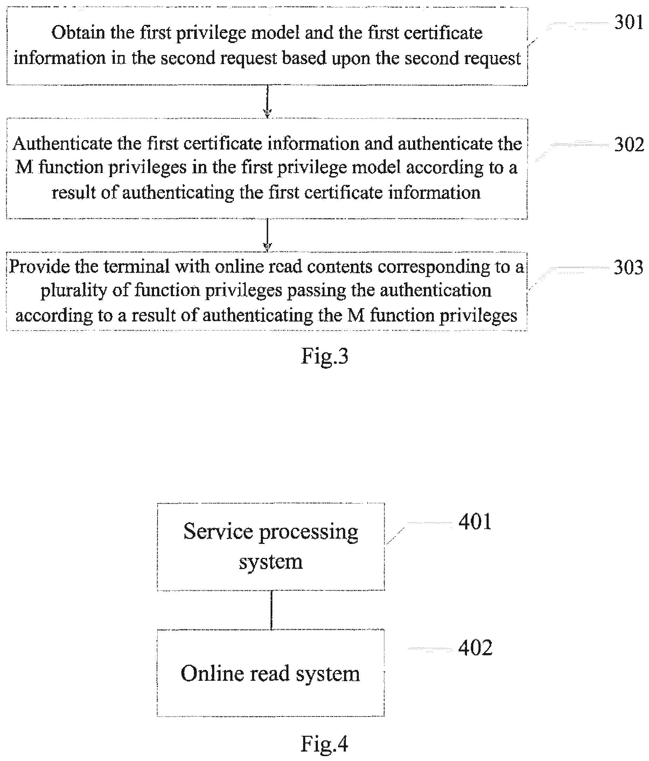

As illustrated in Fig.3 depicting a flow chart of authenticating the first privilege model and the first certificate information in the second request in the online read system, the flow particularly includes:
The step 301 is to obtain the first privilege model and the first certificate information in the second request based upon the second request.

Upon reception of the second request, the online read system obtains the first privilege model in the second request and the periods of validity corresponding to the M function privileges in the first privilege model and also obtains the first certificate information and the period of validity corresponding to the first certificate.

The step 302 is to authenticate the first certificate information and to authenticate the M function privileges in the first privilege model according to a result of authenticating the first certificate information.

The online read system firstly authenticates the first certificate information including a unique certificate and a period of validity corresponding to the certificate, and the online read system authenticates the certificate for legality. If the certificate is legal, then the period of validity of the certificate is authenticated; or if the certificate is illegal, then the second request is rejected.

Particularly if the user modifies the contents in the privilege model without being permitted, then the certificate is authenticated as illegality, and the second request is rejected.

After the certificate is authenticated for legality, the period of validity of the certificate is authenticated by obtaining and comparing the period of validity of the first certificate with the current time of the use of the certificate by the user, and if the period of validity of the certificate is later than the current time, then the certificate passes the authentication, and the first privilege model is parsed; otherwise, the second request is rejected.

The online read system authenticates the first privilege model after both the legality of the certificate in the first certificate information and the period of validity corresponding to the certificate passes the authentications.

The online read system obtains the M privilege functions in the first privilege model and the period of validity corresponding to each of the M privilege functions and obtains the current time of the reception of the second request and compares the period of validity of each of the M privilege functions with the current time.

The step 303 is to provide the terminal with online read contents corresponding to a plurality of function privileges passing the authentication according to a result of authenticating the M function privileges.

If L function privileges among the M function privileges have periods of validity later than the current time, then the terminal is provided with online read contents corresponding to the L function privileges, and the user can access directly a service corresponding to the L function privileges on the terminal, thus avoiding a frequently transmitted request and frequent information interaction, where L is an integer larger than or equal to 0 and smaller than or equal to M.

As illustrated in Fig.4 depicting a system for authenticating an online read digital content, the system particularly includes:

A service processing system 401 configured to receive an online read first request from a terminal, to obtain first user information in the first request, to obtain first privilege information corresponding to the first user information according to stored correspondence relationships between privilege information and user information, to generate a first privilege model according to the first privilege information, the first privilege model including M function privileges possessed by a user, where M is larger than or equal to 1, to obtain first certificate information corresponding to the first privilege model according to stored correspondence relationships between certificate information and privilege models, and to generate a second request including the first privilege model and the first certificate information.

An online read system 402 connected with the service processing system is configured to receive the second request, and to authenticate the first certificate information and the M function privileges in the first privilege model, included in the second request.

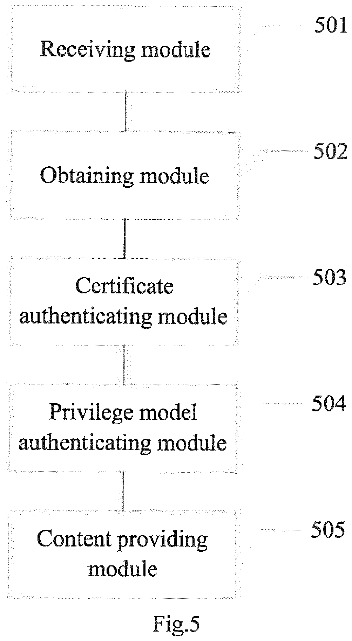

As illustrated in Fig.5 depicting a schematic structural diagram of the online read system, the system particularly includes:

A receiving model 501 configured to receive the second request;

An obtaining module 502 configured to obtain the first privilege model and the first certificate information in the second request;

A certificate authenticating module 503 configured to authenticate the first certificate information;

A privilege model authenticating module 504 configured to authenticate the M function privileges in the privilege model according to a result of authenticating the first privilege information; and

A content providing module 505 configured to provide the terminal with online read contents corresponding to a plurality of function privileges passing the authentication according to a result of authenticating the M function privileges.

Furthermore the certificate authenticating module 503 further includes:

A certificate period of validity obtaining unit configured to obtain a period of validity in the first certificate information.

A certificate period of validity authenticating unit configured to compare the period of validity of the first certificate information with the current time, and if the current time is within the period of validity of the certificate, to have the certificate pass the authentication; otherwise, to reject the second request.

Furthermore the privilege model authenticating module authenticating the M function privileges in the privilege model includes:

Obtaining the M function privileges in the first privilege model and a period of validity corresponding to each function privilege; and

Comparing the periods of validity of L function privileges among the M function privileges with the current time.

The invention provides a method of authenticating an online read digital content, which includes: receiving an online read first request from a terminal, obtaining first user information in the first request, obtaining first privilege information corresponding to the first user information, generating a first privilege model according to the first privilege information, obtaining first certificate information corresponding to the first privilege model according to stored correspondence relationships between certificate information and privilege models, generating a second request including the first privilege model and the first certificate information, and authenticating the first certificate information and M function privileges in the first privilege model, included in the second request, thereby addressing the performance problem of systems arising from frequent signal interaction between the systems and enabling convenient digital content management while ensuring the security of digital contents to inhibit illegal pirating and to well protect copyrights of the digital contents.

Evidently those skilled in the art can make various modifications and variations to the invention without departing from the essence and scope of the invention. Thus the invention is also intended to encompass these modifications and variations thereto so long as the modifications and variations come into the scope of the claims appended to the invention and their equivalents.

## Claims

1. A method of authenticating an online read digital content, comprising:
receiving an online read first request (101) from a terminal, and obtaining first user information in the first request;
obtaining first privilege information (102) corresponding to the first user information according to stored correspondence relationships between privilege information and user information, and generating a first privilege model according to the first privilege information, the first privilege model comprising M function privileges possessed by a user, wherein M is larger than or equal to 1;
obtaining first certificate information (103) corresponding to the first privilege model according to stored correspondence relationships between certificate information and privilege models;
generating a second request (104) including the first privilege model and the first certificate information; and
authenticating (105) the first certificate information and the M function privileges in the first privilege model, comprised in the second request;
wherein the authenticating the first certificate information and the M function privileges in the first privilege model, comprised in the second request comprises:
obtaining the first privilege model and the first certificate information in the second request based upon the second request;
authenticating the first certificate information and authenticating the M function privileges in the first privilege model according to a result of authenticating the first certificate information; and
providing the terminal with online read contents corresponding to a plurality of function privileges passing the authentication according to a result of authenticating the M function privileges.

2. The method according to claim 1, wherein the first privilege model comprises one or more of a read range privilege, an online concurrence privilege, a service time privilege, a copy privilege and a print privilege, and there is a corresponding period of validity for each of the function privileges.

3. The method according to claim 2, wherein the first certificate information comprises a unique certificate and a period of validity corresponding to the certificate.

4. The method according to claim 1, wherein the authenticating the first certificate information comprises:
obtaining the period of validity in the first certificate information; and
comparing the period of validity of the first certificate information with the current time, and if the period of validity of the certificate is later than the current time, then having the certificate pass the authentication and parsing the first privilege model; otherwise, rejecting the second request.

5. The method according to claim 4, wherein the parsing the first privilege model comprises:
obtaining the M privilege functions in the first privilege model and a period of validity corresponding to each privilege function; and
comparing the period of validity of each of the M privilege functions with the current time, and if L function privileges among the M function privileges have periods of validity later than the current time, then providing the terminal with online read contents corresponding to the L function privileges, wherein L is an integer larger than or equal to 0 and smaller than or equal to M.

6. A system for authenticating an online read digital content, comprising:
a service processing system configured to receive an online read first request from a terminal, to obtain first user information in the first request, to obtain first privilege information corresponding to the first user information according to stored correspondence relationships between privilege information and user information, to generate a first privilege model according to the first privilege information, the first privilege model including M function privileges possessed by a user, wherein M is larger than or equal to 1, to obtain first certificate information corresponding to the first privilege model according to stored correspondence relationships between certificate information and privilege models, and to generate a second request including the first privilege model and the first certificate information; and
an online read system configured to receive the second request, and to authenticate the first certificate information and the M function privileges in the first privilege model, comprised in the second request;
wherein the online read system comprises:
a receiving model configured to receive the second request;
an obtaining module configured to obtain the first privilege model and the first certificate information in the second request;
a certificate authenticating module configured to authenticate the first certificate information;
a privilege model authenticating module configured to authenticate the M function privileges in the privilege model according to a result of authenticating the first privilege information; and
a content providing module configured to provide the terminal with online read contents corresponding to a plurality of function privileges passing the authentication according to a result of authenticating the M function privileges.

7. The system according to claim 6, wherein the certificate authenticating module comprises:
a certificate period of validity obtaining unit configured to obtain a period of validity in the first certificate information;
a certificate period of validity authenticating unit configured to compare the period of validity of the first certificate information with the current time, and if the current time is within the period of validity of the certificate, to have the certificate pass the authentication; otherwise, to reject the second request.

8. The system according to claim 6, wherein the privilege model module authenticating the M function privileges in the privilege model comprises:
obtaining the M function privileges in the first privilege model and a period of validity corresponding to each function privilege; and
comparing the periods of validity of L function privileges among the M function privileges with the current time.

## Patentansprüche

1. Verfahren zur Authentifizierung einer Online-legung digitaler Inhalte, umfassend:
Empfangen einer ersten Anforderung auf Online-Lesung (101) von einem Terminal, und Erhalten von ersten Benutzerinformationen in der ersten Anforderung;
Erhalten von ersten Berechtigungsinformationen (102), welche den ersten Benutzerinformationen gemäß gespeicherten Zuordnungsverhältnissen zwischen Berechtigungsinformationen und Benutzerinformationen entsprechen, und Erzeugen eines ersten Berechtigungsmodells gemäß den ersten Berechtigungsinformationen, wobei das erste Berechtigungsmodell M Funktionsberechtigungen umfasst, welche ein Benutzer besitzt, wobei M größer oder gleich 1 ist;
Erhalten von ersten Zertifikatsinformationen (103), welche dem ersten Berechtigungsmodell gemäß den gespeicherten Zuordnungsverhältnissen zwischen Zertifikatsinformationen und Berechtigungsmodellen entsprechen;
Erzeugen einer zweiten Anforderung (104), welche das erste Berechtigungsmodell und die ersten Zertifikatsinformationen einschließt; und
Authentifizierung (105) der ersten Zertifikatsinformationen und der M Funktionsberechtigungen in dem ersten Berechtigungsmodell, welche in der zweiten Anforderung umfasst sind;
wobei die Authentifizierung der ersten Zertifikatsinformationen und der M Funktionsberechtigungen in dem ersten Berechtigungsmodell, welche in der zweiten Anforderung umfasst sind, umfasst:
Erhalten des ersten Berechtigungsmodells und der ersten Zertifikatsinformationen in der zweiten Anforderung auf Basis der zweiten Anforderung;
Authentifizierung der ersten Zertifikatsinformationen und Authentifizierung der M Funktionsberechtigungen in dem ersten Berechtigungsmodell gemäß einem Ergebnis der Authentifizierung der ersten Zertifikatsinformationen; und
Bereitstellen von Inhalten zur Online-Lesung, welche einer Vielzahl von Funktionsberechtigungen entsprechen, welche die Authentifizierung gemäß einem Ergebnis der Authentifizierung der M Funktionsberechtigungen bestehen, am Terminal.

2. Verfahren nach Anspruch 1, wobei das erste Berechtigungsmodell ein oder mehrere von einer Lesebereichsberechtigung, einer Online-Konkurrenzberechtigung, einer Dienstzeitberechtigung, einer Kopierberechtigung und einer Druckberechtigung umfasst, und es eine entsprechende Gültigkeitsdauer für jede der Funktionsberechtigungen gibt.

3. Verfahren nach Anspruch 2, wobei die ersten Zertifikatsinformationen ein eindeutiges Zertifikat und eine dem Zertifikat entsprechende Gültigkeitsdauer umfassen.

4. Verfahren nach Anspruch 1, wobei die Authentifizierung der ersten Zertifikatsinformationen umfasst:
Erhalten der Gültigkeitsdauer in den ersten Zertifikatsinformationen; und
Vergleichen der Gültigkeitsdauer der ersten Zertifikatsinformationen mit der aktuellen Zeit, und falls die Gültigkeitsdauer des Zertifikats nach der aktuellen Zeit endet, dann Bestehen der Authentifizierung für das Zertifikat und Parsen des ersten Berechtigungsmodells; anderenfalls Ablehnen der zweiten Anforderung.

5. Verfahren nach Anspruch 4, wobei das Parsen des ersten Berechtigungsmodells umfasst:
Erhalten der M Berechtigungsfunktionen in dem ersten Berechtigungsmodell und einer Gültigkeitsdauer, welche jeweils einer Berechtigungsfunktion entspricht; und
Vergleichen der Gültigkeitsdauer jeder der M Berechtigungsfunktionen mit der aktuellen Zeit, und falls L Funktionsberechtigungen unter den M Funktionsberechtigungen Gültigkeitsdauern haben, die nach der aktuellen Zeit enden, dann Bereitstellen am Terminal von Inhalten zur Online-Lesung, welche den L Funktionsberechtigungen entsprechen, wobei L eine Ganzzahl größer oder gleich 0 und kleiner oder gleich M ist.

6. System zur Authentifizierung einer Online-Lesung digitaler Inhalte, umfassend:
ein Dienstverarbeitungssystem, das konfiguriert ist, eine erste Anforderung auf Online-Lesung von einem Terminal zu empfangen, erste Benutzerinformationen in der ersten Anforderung zu erhalten, erste Berechtigungsinformationen zu erhalten, welche den ersten Benutzerinformationen gemäß gespeicherten Zuordnungsverhältnissen zwischen Berechtigungsinformationen und Benutzerinformationen entsprechen, ein erstes Berechtigungsmodell gemäß den ersten Berechtigungsinformationen zu erzeugen, wobei das erste Berechtigungsmodell M Funktionsberechtigungen beinhaltet, welche ein Benutzer besitzt, wobei M größer oder gleich 1 ist, erste Zertifikatsinformationen zu erhalten, welche dem ersten Berechtigungsmodell gemäß gespeicherten Zuordnungsverhältnissen zwischen Zertifikatsinformationen und Berechtigungsmodellen entsprechen, und eine zweite Anforderung zu erzeugen, welche das erste Berechtigungsmodell und die ersten Zertifikatsinformationen einschließt; und
ein System zur Online-Lesung, welches konfiguriert ist, die zweite Anforderung zu erhalten und die ersten Zertifikatsinformationen und die M Funktionsberechtigungen in dem ersten Berechtigungsmodell, welche in der zweiten Anforderung umfasst sind, zu authentifizieren;
wobei das System zur Online-Lesung umfasst:
ein Empfangsmodell, welches konfiguriert ist, die zweite Anforderung zu empfangen;
ein Erhaltemodell, welches konfiguriert ist, das erste Berechtigungsmodell und die ersten Zertifikatsinformationen in der zweiten Anforderung zu erhalten;
ein Zertifikatsauthentifizierungsmodul, welches konfiguriert ist, die ersten Zertifikatsinformationen zu authentifizieren;
ein Modul zur Authentifizierung von Berechtigungsmodellen, welches konfiguriert ist, die M Funktionsberechtigungen in dem Berechtigungsmodell gemäß einem Ergebnis der Authentifizierung der ersten Berechtigungsinformationen zu authentifizieren; und
ein Modul zum Bereitstellen von Inhalten, welches konfiguriert ist, am Terminal Inhalte zur Online-Lesung bereitzustellen, welche einer Vielzahl von Funktionsberechtigungen entsprechen, welche die Authentifizierung gemäß einem Ergebnis der Authentifizierung der M Funktionsberechtigungen bestehen.

7. System nach Anspruch 6, wobei das Zertifikatsauthentifizierungsmodul umfasst:
eine Einheit zum Erhalten der Gültigkeitsdauer eines Zertifikats, welche konfiguriert ist, eine Gültigkeitsdauer in den ersten Zertifikatsinformationen zu erhalten;
eine Einheit zur Authentifizierung der Gültigkeitsdauer eines Zertifikats, welche konfiguriert ist, die Gültigkeitsdauer der ersten Zertifikatsinformationen mit der aktuellen Zeit zu vergleichen, und falls die aktuelle Zeit innerhalb der Gültigkeitsdauer des Zertifikats liegt, das Zertifikat die Authentifizierung bestehen zu lassen; anderenfalls die zweite Anforderung abzulehnen.

8. System nach Anspruch 6, wobei das Modul des Berechtigungsmodells, welches die M Funktionsberechtigungen in dem Berechtigungsmodell authentifiziert, umfasst:
Erhalten der M Funktionsberechtigungen in dem ersten Berechtigungsmodell und einer Gültigkeitsdauer, welche jeweils einer Funktionsberechtigung entspricht; und
Vergleichen der Gültigkeitsdauern von L Funktionsberechtigungen unter den M Funktionsberechtigungen mit der aktuellen Zeit.

## Revendications

1. Procédé d'authentification d'un contenu numérique lu en ligne, comprenant :
la réception d'une première demande de lecture en ligne (101) à partir d'un terminal, et l'obtention de premières informations d'utilisateur dans la première demande ;
l'obtention de premières informations de privilège (102) correspondant aux premières informations d'utilisateur en fonction de relations de correspondance stockées entre des informations de privilège et des informations d'utilisateur, et la génération d'un premier modèle de privilège en fonction des premières informations de privilège, le premier modèle de privilège comprenant M privilèges de fonction traités par un utilisateur, dans lequel M est supérieur ou égal à 1 ;
l'obtention de premières informations de certificat (103) correspondant au premier modèle de privilège en fonction de relations de correspondance stockées entre des informations de certificat et des modèles de privilège ;
la génération d'une deuxième demande (104) comprenant le premier modèle de privilège et les premières informations de certificat ; et
l'authentification (105) des premières informations de certificat et des M privilèges de fonction dans le premier modèle de privilège, compris dans la deuxième demande ;
dans lequel l'authentification des premières informations de certificat et des M privilèges de fonction dans le premier modèle de privilège, compris dans la deuxième demande comprend :
l'obtention du premier modèle de privilège et des premières informations de certificat dans la deuxième demande sur la base de la deuxième demande ;
l'authentification des premières informations de certificat et l'authentification des M privilèges de fonction dans le premier modèle de privilège en fonction d'un résultat d'authentification des premières informations de certificat ; et
la fourniture au terminal de contenus lus en ligne correspondant à une pluralité de privilèges de fonction réussissant l'authentification en fonction d'un résultat d'authentification des M privilèges de fonction.

2. Procédé selon la revendication 1, dans lequel le premier modèle de privilège comprend un ou plusieurs parmi un privilège de plage de lecture, un privilège de concurrence en ligne, un privilège de temps de service, un privilège de copie et un privilège d'impression, et il existe une période de validité correspondante pour chacun des privilèges de fonction.

3. Procédé selon la revendication 2, dans lequel les premières informations de certificat comprennent un certificat unique et une période de validité correspondant au certificat.

4. Procédé selon la revendication 1, dans lequel l'authentification des premières informations de certificat comprend :
l'obtention de la période de validité dans les premières informations de certificat ; et
la comparaison de la période de validité des premières informations de certificat avec le temps actuel et, si la période de validité du certificat est postérieure au temps actuel, alors le fait que le certificat réussit l'authentification et l'analyse syntaxique du premier modèle de privilège ; sinon, le rejet de la deuxième demande.

5. Procédé selon la revendication 4, dans lequel l'analyse syntaxique du premier modèle de privilège comprend :
l'obtention des M fonctions de privilège dans le premier modèle de privilège et d'une période de validité correspondant à chaque fonction de privilège ; et
la comparaison de la période de validité de chacune des M fonctions de privilège avec le temps actuel, et si L privilèges de fonction parmi les M privilèges de fonction ont des périodes de validité postérieures au temps actuel, alors la fourniture au terminal de contenus lus en ligne correspondant aux L privilèges de fonction, dans lequel L est un entier supérieur ou égal à 0 et inférieur ou égal à M.

6. Système d'authentification d'un contenu numérique lu en ligne, comprenant :
un système de traitement de service configuré pour recevoir une première demande de lecture en ligne à partir d'un terminal, pour obtenir des premières informations d'utilisateur dans la première demande, pour obtenir des premières informations de privilège correspondant aux premières informations d'utilisateur en fonction de relations de correspondance stockées entre des informations de privilège et des informations d'utilisateur, pour générer un premier modèle de privilège en fonction des premières informations de privilège, le premier modèle de privilège comprenant M privilèges de fonction traités par un utilisateur, dans lequel M est supérieur ou égal à 1, pour obtenir des premières informations de certificat correspondant au premier modèle de privilège en fonction de relations de correspondance stockées entre des informations de certificat et des modèles de privilège, et pour générer une deuxième demande comprenant le premier modèle de privilège et les premières informations de certificat ; et
un système de lecture en ligne configuré pour recevoir la deuxième demande et pour authentifier les premières informations de certificat et des M privilèges de fonction dans le premier modèle de privilège, compris dans la deuxième demande ;
dans lequel le système de lecture en ligne comprend :
un modèle de réception configuré pour recevoir la deuxième demande ;
un module d'obtention configuré pour obtenir le premier modèle de privilège et les premières informations de certificat dans la deuxième demande ;
un module d'authentification de certificat configuré pour authentifier les premières informations de certificat ;
un module d'authentification de modèle de privilège configuré pour authentifier les M privilèges de fonction dans le modèle de privilège en fonction d'un résultat d'authentification des premières informations de privilège ; et
un module de fourniture de contenus configuré pour fournir au terminal des contenus lus en ligne correspondant à une pluralité de privilèges de fonction réussissant l'authentification en fonction d'un résultat d'authentification des M privilèges de fonction.

7. Système selon la revendication 6, dans lequel le module d'authentification de certificat comprend :
une unité d'obtention de période de validité de certificat configurée pour obtenir une période de validité dans les premières informations de certificat ;
une unité d'authentification de période de validité de certificat configurée pour comparer la période de validité des premières informations de certificat avec le temps actuel et, si le temps actuel est dans la période de validité du certificat, pur faire en sorte que le certificat réussisse l'authentification ; sinon, pour rejeter la deuxième demande.

8. Système selon la revendication 6, dans lequel le module de modèle de privilège authentifiant les M privilèges de fonction dans le modèle de privilège comprend :
l'obtention des M privilèges de fonction dans le premier modèle de privilège et d'une période de validité correspondant à chaque privilège de fonction ; et
la comparaison des périodes de validité de L privilèges de fonction parmi les M privilèges de fonction avec le temps actuel.
